# EUROPÄISCHE PATENTANMELDUNG

(11) **EP 1 757 539 A2**
(43) Veröffentlichungstag der Anmeldung: **28.02.2007**
(21) Anmeldenummer: 06015291.5
(22) Anmeldetag: 22.07.2006
(51) Int. Cl.: B65D 88/56, B65D 90/00, B65D 88/12, B65D 90/16, B65D 90/18

(54) **Vorrichtung zum Transport von Schüttgütern und Kuppelstück**

(30) Priorität: 15.08.2005 DE 102005038701
(71) Anmelder: MWB Industrietechnik GmbH & Co. KG, 27568 Bremerhaven (DE)
(72) Erfinder: Gloystein, Simone, 28355 Bremen (DE)
(74) Vertreter: Möller, Friedrich

(57) **Zusammenfassung**

Zur Aufnahme von Schüttgut bekannte Behälter (20) sind nicht uneingeschränkt zum Transport auf unterschiedlichen Verkehrsmitteln, insbesondere Schiffen und Fahrzeugen, geeignet.

Die Erfindung sieht eine Vorrichtung zum Transport von Schüttgütern vor, die einen Behälter (20) zur Aufnahme des Schüttguts aufweist, wobei der Behälter (20) von einem Rahmen (21) umgeben ist und unter dem Rahmen (21) ein Unterrahmen (22) vorgesehen ist. Vorzugsweise ist der Behälter (20) mit dem Rahmen (21) gegenüber dem Unterrahmen (22) verkippbar. Weiterhin sind an den Ecken des Rahmens (21) und des Unterrahmens (22) übliche Eckbeschläge (44, 51) von genormten Containern vorgesehen.

Mehrere erfindungsgemäße Vorrichtungen sind zum Transport auf Schiffen wie genormte Container stapelbar und an ihren Eckbeschlägen (44, 51) durch Kuppelstücke miteinander verbindbar. Außerdem kann der Behälter (20) zusammen mit dem Rahmen (21) gegenüber dem Unterrahmen (22) verkippt werden.

## Beschreibung

Die Erfindung betrifft eine Vorrichtung zum Transport von Schüttgütern gemäß dem Oberbegriff des Anspruchs 1. Des Weiteren betrifft die Erfindung ein Kuppelstück für insbesondere die Vorrichtung zum Transport von Schüttgütern gemäß dem Oberbegriff des Anspruchs 15.

Es sind verschiedene Vorrichtungen zum Transport von Schüttgütern bekannt. Diese sind überwiegend an den Transport mit speziellen Transportmitteln, insbesondere Kraftfahrzeugen, angepasst. Zum Transport von Schüttgütern auf verschiedenen Transportmitteln, insbesondere Schiffen und Landfahrzeugen, aber auch Flugzeugen, sind die bekannten Vorrichtungen nicht geeignet. Sofern die bekannten Vorrichtungen zum Transport auf verschiedenen Transportmitteln eingesetzt werden, handelt es sich um einfache Vorrichtungen, beispielsweise genormte Container, die jedoch nur schwierig entladbar sind und deshalb besondere Einrichtungen erfordern, um die Schüttgüter insbesondere vollständig entladen zu können.

Der Erfindung liegt die Aufgabe zugrunde, eine Vorrichtung zu schaffen, mit der Schüttgüter auf verschiedenen Transportmitteln, insbesondere Landfahrzeugen und Schiffen, transportierbar sind und gleichwohl ein einfaches, restloses Entladen zulassen. Weiterhin ist es Aufgabe der Erfindung, ein Kuppelstück zu schaffen, das insbesondere für die Vorrichtung zum Transport von Schüttgütern geeignet ist.

Eine Vorrichtung zur Lösung der Aufgabe weist die Merkmale des Anspruchs 1 auf. Durch die Zuordnung eines Unterrahmens zum Behälter, vorzugsweise einen Bodenrahmen oder einen einen Bodenrahmen aufweisenden Rahmen des Behälters, ist es möglich, den Behälter zu kippen und/oder ihn als Abrollbehälter zu betreiben. Dadurch sind universelle Be- und Entladevorgänge möglich. Insbesondere kann die gesamte Vorrichtung mit dem beladenen und auch unbeladenen Behälter auf beliebigen Fahrzeugen angeordnet werden. Der Unterrahmen kann dabei so ausgebildet sein, dass er alle Funktionen in sich vereint, die erforderlich sind, um die Vorrichtung auf beliebigen Transportmitteln anzuordnen und das Schüttgut aus dem jeweiligen Behälter insbesondere zu entladen. Im einfachsten Falle ist der Behälter mit mindestens einem Bodenrahmen versehen oder dem Behälter mindestens ein solcher Bodenrahmen zugeordnet. Vorzugsweise ist der Behälter ganz von einem dreidimensionalen Rahmen umgeben, wobei der Bodenrahmen Bestandteil des dreidimensionalen Rahmens ist, nämlich von der Bodenseite desselben gebildet wird. Der Rahmen stabilisiert und schützt den Behälter. Außerdem kann der Rahmen als Stützstruktur dienen, die es erlaubt, mehrere Behälter übereinander zu stapeln, beispielsweise wenn diese auf einem Schiff transportiert werden sollen.

Es ist weiterhin vorgesehen, dass der Unterrahmen mindestens einseitig vom Behälter lösbar ist. Dadurch kann der Behälter für besondere Be- und Entladevorgänge ganz oder teilweise Relativbewegungen zum Unterrahmen ausführen. Das gilt vor allem dann, wenn der Behälter gemäß einer bevorzugten Weiterbildung der Vorrichtung gegenüber dem Unterrahmen kippbar ist. Das Kippen des Behälters gegenüber dem Unterrahmen ermöglicht ein einfaches Entleeren des im Behälter enthaltenen Schüttguts. Dabei bildet der Unterrahmen eine Drehachse zum Verschwenken des Behälters. Das Transportfahrzeug des Behälters braucht deswegen nicht in besonderer Weise ausgebildet zu sein, um den Behälter kippen zu können.

Bei einem einen Rahmen oder mindestens einen Bodenrahmen aufweisenden Behälter ist gemäß einer Weiterbildung der Erfindung vorgesehen, den Bodenrahmen kippbar mit dem Unterrahmen zu verbinden. Die erfindungsgemäße Vorrichtung schafft somit eine als ganzes handhabbare Einheit, die nicht nur zum Transport von Schüttgut dient sondern auch ein einfaches Entladen des das Schüttgut aufnehmenden Behälters ermöglicht. Gegebenenfalls kann die Vorrichtung auch mehrere separate Behälter enthalten, die zusammen oder getrennt kippbar sind.

Es ist erfindungsgemäß weiterhin vorgesehen, den Rahmen des Behälters zusammen mit dem Unterrahmen mit Abmessungen zu versehen, die denen eines genormten Containers entsprechen, beispielsweise eines 20', 40' oder 45'-Containers. Auf diese Weise lässt sich die gesamte Vorrichtung, nämlich der Behälter mit dem Rahmen und dem Unterrahmen, beim Laden und Entladen insbesondere von Schiffen, als Einheit wie genormte Container handhaben. Dadurch sind übliche Lade- und Entladeeinrichtungen einsetzbar.

Es ist weiterhin vorgesehen, den dem Behälter umgebenden Rahmen mindestens an den oberen Ecken mit üblichen (genormten) Eckbeschlägen von Containern zu versehen. Vorzugsweise weisen die oberen (vier) Ecken des Rahmens solche üblichen Eckbeschläge auf. Darüber hinaus weist der Unterrahmen an seinen vier Ecken ebenfalls genormte Eckbeschläge, wie sie für Container üblich sind, auf. Die ganze Vorrichtung verfügt an allen ihren Ecken über Eckbeschläge, sodass sie wie ein Container handhabbar und auch übereinander stapelbar und untereinander verbindbar ist, insbesondere an Bord von Schiffen. Besonders vorteilhaft ist es, wenn auch die unteren Ecken des Rahmens, also der Bodenrahmen, mit genormten Eckbeschlägen üblicher Container versehen sind. Dann lassen sie der Bodenrahmen und der Unterrahmen bei Bedarf verbinden durch handelsübliche Kuppelstücke, wie sie auch zum Verbinden von übereinander gestapelten Containern an ihren benachbarten Eckbeschlägen eingesetzt werden.

Die außenliegenden Eckbeschläge der Vorrichtung, also die oberen Eckbeschläge des Rahmens und die Eckbeschläge des Unterrahmens, weisen Abstände voneinander auf, die denen genormter üblicher Container entsprechen, beispielsweise 20', 40' oder 45'-Container. Dadurch kann die Vorrichtung genauso gehandhabt werden wie genormte Container. Die Vorrichtung kann dadurch auch mit anderen Containern zusammen gestapelt werden, insbesondere an Bord von Schiffen.

Gemäß einer weiteren Ausgestaltung der Vorrichtung ist vorgesehen, an einer Seite, insbesondere an der Stirnseite, zwischen zwei Eckbeschlägen des Unterrahmens und zwei darüber sich befindenden Eckbeschlägen des Bodenrahmens Kuppelstücke anzuordnen. Es ist so auf einfache Weise möglich, bei Bedarf den Unterrahmen vom Rahmen des Behälters mindestens an einer Seite abzukuppeln. Wenn gemäß einem weiteren Vorschlag der Erfindung an einer gegenüberliegenden Seite der Rahmen, insbesondere Bodenrahmen, des Behälters schwenkbar bzw. kippbar mit dem Unterrahmen verbunden ist, ermöglicht es die lösbare Verbindung der Beschläge des Bodenrahmens und des Unterrahmens durch Kuppelstücke, beide während des Transports zusammenzuhalten, wohingegen nach dem Lösen der beiden Kuppelstücke an einer Seite der Behälter gegenüber dem Unterrahmen verkippbar ist.

Vorzugsweise sind auch den Eckbeschlägen derjenigen Seite der Vorrichtung, um die zum Verkippen der Bodenrahmen gegenüber dem Unterrahmen verschwenkbar ist, Kuppelstücke lösbar angeordnet. Diese Kuppelstücke sind dann so ausgebildet, dass sie zwei relativ zueinander bewegliche Teile aufweisen, insbesondere ein gegenüber einem Unterteil verkippbares Oberteil. Diese besonderen Kuppelstücke bilden dann die Kippachse der Vorrichtung, sodass keine besonderen Schwenkverbindungen zwischen dem Bodenrahmen und dem Unterrahmen erforderlich sind. Mit solchen besonderen Kuppelstücken können durch Lösen der Kuppelstücke an allen vier Ecken des Bodenrahmens und des Unterrahmens beide voneinander getrennt werden, wenn das erforderlich sein sollte. Es ist so denkbar, den Schiffstransport ohne den Unterrahmen durchzuführen. Wenn ein Behälter vom Schiff umgeladen wird auf ein Landfahrzeug, wird dieses auf den hierauf bereits befestigten Unterrahmen aufgesetzt und mit Kuppelstücken befestigt, wie das auch der Fall ist, wenn Container von Landfahrzeugen transportiert werden. Wegen der den Kuppelstücken zugeordneten Kippachsen ist dann der Behälter gegenüber dem Unterrahmen kippbar.

Gemäß einer weiteren bevorzugten Ausgestaltung der Vorrichtung ist zwischen den Ecken des Unterrahmens und des Bodenrahmens mindestens ein Stützmittel angeordnet. Das mindestens eine Stützmittel ist vorzugsweise mit dem Unterrahmen fest verbunden; es kann alternativ aber auch mit dem Bodenrahmen verbunden sein. Das mindestens eine Stützmittel ist dabei so bemessen, dass es den Abstand zwischen dem Bodenrahmen und dem Unterrahmen an einigen Stellen überbrückt, sodass sich der Behälter auch zwischen den Eckbeschlägen über den Bodenrahmen auf den Unterrahmen abstützen kann. Dadurch trägt der Unterrahmen nicht nur an den Ecken den Bodenrahmen mit dem Behälter sondern auch in mindestens einem Bereich zwischen den Ecken. Zweckmäßigerweise sind mehrere Stützmittel vorhanden, wobei wenigstens einige gleichzeitig Taschen zur Aufnahme von Gabelstaplerzinken bilden, sodass die Stützmittel über eine Mehrfachfunktion verfügen.

Das Verkippen des Behälters mit dem Rahmen und den darin integrierten Bodenrahmen gegenüber dem Unterrahmen kann durch externe und interne Huborgane erfolgen. Werden externe Huborgane verwendet, beispielsweise ein Kran, ein Hubgerüst oder ein Gabelstapler, braucht die Vorrichtung selbst keine Mittel zum Verkippen des Behälters mit dem Rahmen aufzuweisen. Bevorzugt weist aber die Vorrichtung mindestens ein Kipporgan zum Verkippen des Behälters mit dem diesen umgebenden Rahmen auf. Vorzugsweise sind mehrere Kipporgane vorgesehen, die zweckmäßigerweise gleich ausgebildet sind. Als Kipporgane kommen Druckmittelzylinder (Hydraulikzylinder), und zwar überwiegend Teleskopzylinder, in Betracht. Es sind aber auch Seilzüge, Scherenhuborgane, Hubspindeln oder Zahnstangen denkbar.

Gemäß einer alternativen Ausgestaltung der Vorrichtung ist vorgesehen, den Unterrahmen mit mindestens zwei parallelen Gleitkufen zu versehen, die sich vorzugsweise in Längsrichtung des Unterrahmens erstrecken. Diese Gleitkufen ermöglichen ein Ab- und Aufrollen der Vorrichtung, und zwar des Behälters mit dem Bodenrahmen bzw. den diesen aufweisenden dreidimensionalen Rahmen und den Unterrahmen auf ein entsprechend ausgebildetes Fahrzeug. Es handelt sich hierbei um ein Fahrzeug, dass an sich bekannter Weise mit einem Auf- und Abrollrahmen versehen ist, der zusätzlich kippbar sein kann. Auf diesen Auf- und Abrollrahmen kann sich die Vorrichtung mit den Gleitkufen entlangbewegen, wodurch die Vorrichtung einen Abrollbehälter darstellt. Die Gleitkufen sind derart der Unterseite des Unterrahmens zugeordnet, dass sie gegenüber einer durch die unteren Auflageflächen der vier Eckbeschläge des Unterrahmens verlaufende Ebene nicht nach unten vorstehen, vorzugsweise mit dieser Ebene bündig abschließen. Auf diese Weise behindern die Gleitkufen das Übereinanderstapeln mehrerer Vorrichtungen nicht. Bevorzugt verfügt der Gleitkufen aufweisende Behälter über Außenabmessungen eines genormten Containers und/oder genormte Eckbeschläge.

Gemäß einer weiteren bevorzugten Ausgestaltung der Vorrichtung ist einer Vorderseite des Behälters, insbesondere des diesen umgebenden dreidimensionalen Rahmens, mindestens eine Leitkufe zugeordnet. Vorzugsweise finden zwei parallele Leitkufen Verwendung, die etwa dem Abstand der Gleitkufen entspricht. Die Leitkufen sind vorzugsweise um horizontale Schwenkachsen verschwekbar, und zwar so, dass die Leitkufen in quer zur vorderen Stirnseite des Behälters verlaufenden vertikalen Ebenen verschwenkbar sind. Das Verschwenken der Leitkufen erfolgt zwischen einer innerhalb des Umrisses des Rahmens liegenden Ruhestellung und einer mindestens teilweise aus dem Umriss des Rahmens herausragenden Betriebsstellung. Vorzugsweise ragen untere Endbereiche der Leitkufen aus den Umrisslinien des Rahmens hervor, wenn sich die Leitkufen in der Betriebsstellung befinden. Dadurch ist es möglich, die Vorrichtung auf ein Abrollgestell eines Fahrzeugs aufzuziehen, ohne dass übrige Teile des Rahmens und des Unterrahmens mit dem Fahrzeugaufbau kollidieren.

Es ist des Weiteren vorgesehen, der vorderen Stirnseite des Behälters oder des ihm umgebenden Rahmens einen schwenkbaren Schleppbügel zuzuordnen. Der Schleppbügel dient üblicherweise zum Anhängen der Vorrichtung an einen Schlepphaken zum Aufziehen der Vorrichtung auf einen Abrollrahmen eines Fahrzeugs. Der Schleppbügel ist so verschwenkbar, dass er bei Nichtgebrauch innerhalb der Umrisslinien des dem Behälter umgebenden Rahmens sich befindet und dadurch gegenüber der Standardabmessungen üblicher Container nicht vorsteht, wodurch er beim gestapelten Transport mehrere Vorrichtungen, insbesondere an Bord von Schiffen, nicht stört. Ist der Schleppbügel in der Gebrauchsstellung gegenüber der Vorderseite des Behälters oder des Rahmens vorgeschwenkt, ragt er über die Umrisslinien des Rahmens hinaus, wodurch er vom Schlepphaken der Auf- und Abrolleinrichtung eines entsprechenden Fahrzeugs ergreifbar ist.

Es ist weiterhin vorgesehen, mit dem Ausklappen des Schleppbügels die oder jede Leitkufe gleichzeitig in Betriebsstellung zu verschwenken. Wenn demnach der Schleppbügel sich in der Betriebsstellung befindet, in der er vom Schlepphaken erfassbar ist, sind auch mindestens die unteren Enden der Leitkufen gegenüber der Vorderseite des den Behälter umgebenden Rahmens ausgeschwenkt, sodass sie über die Umrisse des Rahmens vorstehen. Dadurch ist zuverlässig eine Kollision der Vorrichtung im Übrigen mit der Auf- und Abrolleinrichtung des Fahrzeugs vermeidbar.

Eine Weiterbildung der Erfindung sieht vor, einer unteren, hinteren Ecke des Unterrahmens mindestens eine Rolle zuzuordnen, die in einer Ruhestellung innerhalb des Umrisses des Rahmens und des Unterrahmens der Vorrichtung zurückziehbar oder zurückschwenkbar ist. Nur zum Abrollen der Vorrichtung von einem Fahrzeug oder zum Aufrollen der Vorrichtung auf ein Fahrzeug wird die mindestens eine Rolle gegenüber der hinteren unteren Kante des Unterrahmens vorgefahren oder vorgeschwenkt, sodass die mindestens eine Rolle gegenüber den Umrissen des Rahmens und des Unterrahmens vorsteht und dadurch die an der Vorderseite durch den am Schleppbügel angreifenden Schlepphaken des Fahrzeugs angehobene Vorrichtung auf einem Untergrund verfahrbar ist.

Gemäß einer bevorzugten Weiterbildung der Vorrichtung ist der Behälter mit mindestens einer Entladeöffnung versehen. Durch die Beladeöffnung kann das Schüttgut aus dem Behälter herauslaufen, insbesondere wenn dieser gegenüber dem Unterrahmen angekippt ist. Sofern der Behälter mehrere Kammern aufweist, ist vorgesehen, jeder Kammer mindestens eine Entladeöffnung zuzuordnen.

Um eine restlose Entleerung des Behälters ohne zusätzliche Hilfsmittel sicherzustellen, ist vorgesehen, mindestens den Boden des Behälters in Richtung zur Entladeöffnung geneigt auszubilden. Vorzugsweise sind zusätzlich mindestens Teile der Seitenwände des Behälters zur Entladeöffnung hin konvergierend ausgebildet, sodass sie insgesamt der Behälter sich zur Entladeöffnung hin trichterförmig verengt und dadurch der Behälter vollständig entladbar ist.

Gemäß einer weiteren bevorzugten Ausgestaltung der Erfindung ist vorgesehen, dass die Entladeöffnung an einem Abschnitt einer vorzugsweise hinteren Kante des Bodens des Behälters stufenlos bzw. übergangslos anschließt. Auch dadurch wird eine restlose Entleerung des Behälters, vor allem des angekippten Behälters, sichergestellt.

Jeder Entladeöffnung ist vorzugsweise eine schwenkbare Entladeklappe zugeordnet. Vorzugsweise ist zwischen der Entladeklappe und der zu dieser weisenden Wandung des Behälters eine die Öffnung in der Wandung des Behälters umgebende Dichtung zugeordnet. Die Öffnung ist auf diese Weise durch die Entladeklappe dicht verschließbar, sodass auch feines Schüttgut nicht ungewollt aus dem Behälter entweichen kann. Die Dichtung umgibt die Öffnung derart, dass das Schüttgut ungehindert, nämlich stufenlos, bei geöffneter Entladeklappe aus dem Behälter ausströmen kann.

Es ist weiterhin vorgesehen, dass in der Entladeklappe mindestens ein kleinerer Entladedeckel oder Endladeschieber angeordnet ist. Dieser Entladedeckel ist vorzugsweise so ausgebildet, dass er zum Anschluss von Entladerohren oder - Schläuchen dient. Auch der kleinere, vorzugsweise kreisrunde, Entladedeckel ist gegenüber der Entladeklappe abgedichtet.

Ein Kuppelstück zur Lösung der eingangs genannten Aufgabe weist die Merkmale des Anspruchs 15 auf. Demzufolge verfügt das Koppelstück über ein Mittelteil, das aus einem Unterteil und einem Oberteil gebildet ist, wobei ein Teil gegenüber dem anderen verschwenkbar ist, vorzugsweise das Oberteil gegenüber dem Unterteil um eine horizontale Schwenkachse verschwenkbar ist. Mit einem solchen Kuppelstück kann ein Container oder insbesondere ein Rahmen eines Behälters der vorstehend beschriebenen Vorrichtung mit einem Unterrahmen oder unmittelbar mit einem Fahrzeugchassis verbunden werden, wobei durch die Verschwenkbarkeit des Oberteils des Kuppelstücks gegenüber dem Unterteil der Behälter bzw. Container gegenüber dem Unterrahmen oder dem Fahrzeugaufbau verschwenkbar ist. Ein besonderes Schwenklager zwischen dem Behälter oder Container einerseits und einem Unterrahmen oder ein Fahrzeugaufbau andererseits erübrigt sich dadurch.

Das Kuppelstück kann am aus dem Oberteil und Unterteil gebildeten Mitteilteil einen oberen oder unteren Verriegelungsvorsprung oder auch sowohl einen oberen und unteren Verrieglungsvorsprung aufweisen. Damit ist eine Verbindung des Kuppelstücks mit dem Behälter bzw. Behälterrahmen oder auch einem Container und einem Unterrahmen bzw. einem Fahrzeugaufbau möglich. Bevorzugt weist die Unterseite des Kuppelstücks, also das Unterteil, keinen Verrieglungsvorsprung auf sondern lediglich ein übliches, genormtes Langloch, in das ein Verrieglungsvorsprung des Unterrahmens eines Fahrzeugaufbaus oder auch eines anderen Kuppelstücks eingreift.

Bevorzugte Ausführungsbeispiele der Erfindung werden nachfolgend anhand der Zeichnung näher erläutert. In dieser zeigen:
- Fig. 1: einen Lastkraftwagen mit zwei auf einem Sattelauflieger desselben angeordneten Vorrichtungen gemäß der Erfindung,
- Fig. 2: ein Kraftfahrzeug mit einer kippbar auf dem Sattelaufleger desselben angeordneten Vorrichtung,
- Fig. 3: ein Kraftfahrzeug mit einem kippbaren Abrollaufbau und einer darauf angeordneten Vorrichtung,
- Fig.4: das Kraftfahrzeug der Fig. 3 in verschiedenen Stufen des Abroll- und Aufziehvorgangs einer Vorrichtung,
- Fig. 5: eine Seitenansicht der Vorrichtung,
- Fig. 6: eine Draufsicht auf die Vorrichtung der Fig. 5,
- Fig. 7: eine Seitenansicht einer Vorrichtung nach einem anderen Ausführungsbeispiel,
- Fig. 8: eine Unteransicht der Vorrichtung,
- Fig. 9: eine teilweise Seitenansicht der zum Abrollen und Aufziehen auf eine Abrollvorrichtung eines Kraftfahrzeugs vorgesehene Vorrichtung der Fig. 7,
- Fig. 10: die Vorrichtung der Fig. 9 im teilweise auf dem Abrollaufbau aufgezogener Vorrichtung,
- Fig. 11: eine Einzelheit XI der Vorrichtung aus der Fig. 10,
- Fig. 12: eine Rolle einer Hinterkante der Vorrichtung im ein- und ausgeklappten Zustand,
- Fig. 13: eine Rückansicht auf eine Entladeklappe der Vorrichtung,
- Fig. 14: einen Querschnitt durch die Entladeklappe der Fig. 13,
- Fig. 15: eine mit dem Rahmen durch erfindungsgemäße Kuppelstücke auf dem Chassis eines Sattelaufliegers verriegelten Behälter,
- Fig. 16: einen Querschnitt durch das Kuppelstück der Fig. 15,
- Fig. 17: einen um 90° gedrehten Querschnitt durch das Kuppelstück der Fig. 16 und,
- Fig. 18: eine Draufsicht auf das Kuppelstück der Fig. 16 und 17.

Die in den Figuren gezeigten Vorrichtungen sind zum Transport von Schüttgütern mit beliebigen Verkehrsmitteln, insbesondere Schiffen, Lastkraftwagen und Eisenbahnwagons, vorgesehen. Die Vorrichtungen sind so ausgebildet, dass der Transport von Schüttgütern in vorzugsweise einem geschlossenen Behälter nach dem Prinzip des Containertransports erfolgen kann und auch ein einfaches, restloses Entladen der Schüttgüter ohne spezielle Einrichtungen möglich ist. Die Vorrichtungen sind zu diesem Zweck sowohl nach Art von Containern stapelbar, was insbesondere für den Seetransport wichtig ist und darüber hinaus auch kippbar. Zusätzlich oder alternativ können die Vorrichtungen auch nach Art von Abrollbehältern ausgebildet sein.

Die in den Figuren gezeigten Vorrichtungen weisen im Wesentlichen einen Behälter 20, einen von diesen umgebenden dreidimensionalen Rahmen 21 und einen Unterrahmen 22 auf.

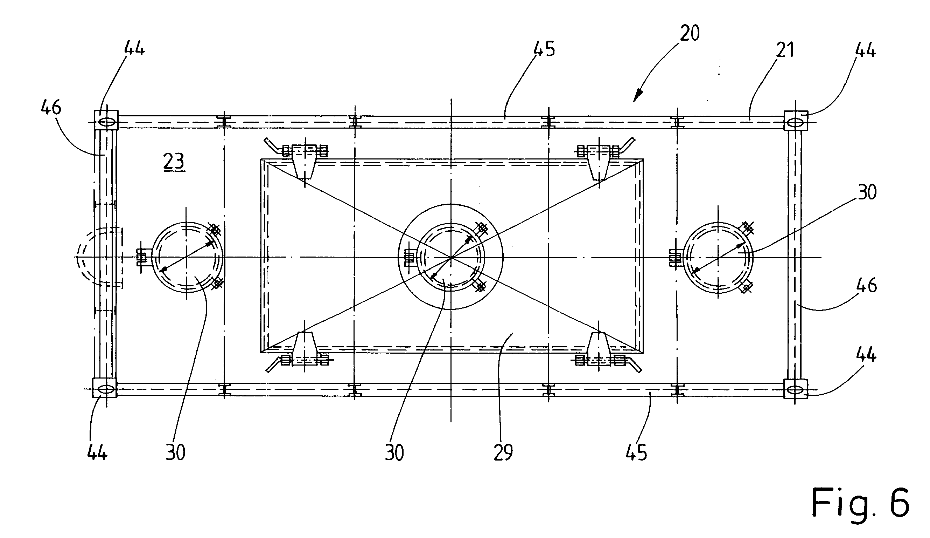

Der Behälter 20 ist im gezeigten Ausführungsbeispiel als allseitig geschlossener bzw. verschließbarer Behälter 20 ausgebildet mit einer Deckwandung 23, einer Bodenwandung 24, Seitenwänden 25, einer Rückwand 26 und einer Vorderwand 27. Die Bodenwandung 24 ist zur Rückwand 26 hin geneigt, und zwar zwischen 5° und 10° gegenüber der Horizontalen. Die Vorderwand 27 ist ebenfalls geneigt, und zwar so, dass sie in Richtung zur Bodenwandung 24 zur Rückwand 26 weist. Die Seitenwände 25 sind zu einem hinteren unteren Eckbereich schräg gerichtet, und zwar so, dass die schräg gerichteten Bereiche der gegenüberliegenden Seitenwände 25 zur Bodenwandung 24 und zur Rückwand 26 trichterförmig zusammenlaufen. Durch die beschriebene Ausbildung des Behälters 20 ist eine restlose Entleerung des Schüttguts durch eine Entladeöffnung 28 in der Rückwand 26 möglich. Die Deckwandung 23 des Behälters 20 verfügt über mindestens eine Öffnung, vorzugsweise eine Befüllöffnung. Im gezeigten Ausführungsbeispiel (Fig. 6) weist die Deckwandung 23 eine großflächige, rechteckige Luke 29 und drei Deckel 30 auf. Zwei Deckel 30 befinden sich auf entgegengesetzten Seiten neben der Luke 29 und ein Deckel 30 mittig im Bereich der Luke 29. Die Deckel 30 und die Luke 29 sind aufklappbar und im geschlossenen Zustand verriegelbar, wobei gegebenenfalls eine Dichtung zwischen der Deckwandung 23 und der Luke 29 sowie den Deckeln 30 vorhanden sein kann.

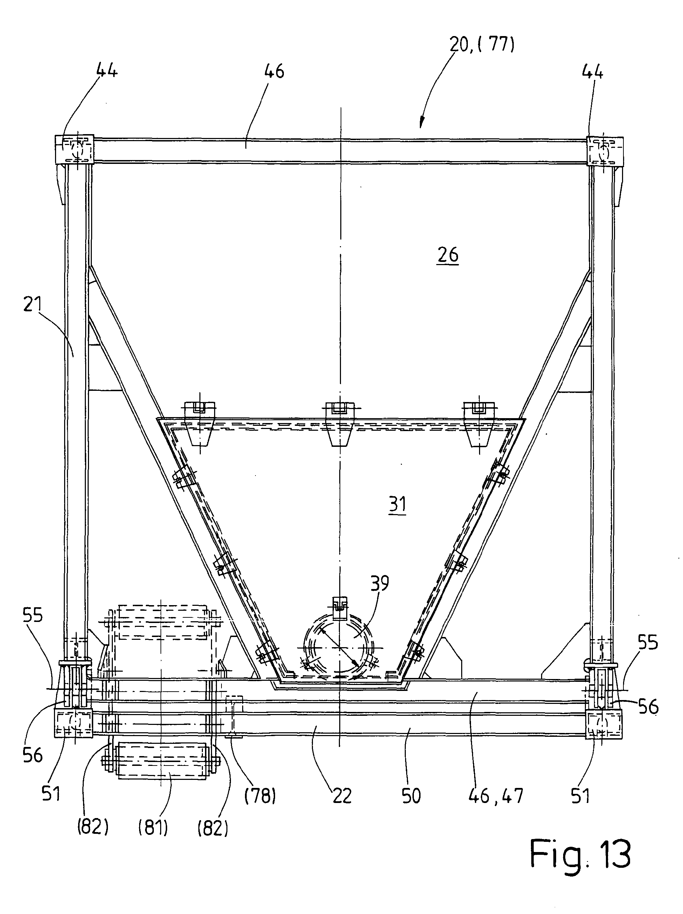

Die Entladeöffnung 28 in der Rückwand 26 des Behälters 20 ist im gezeigten Ausführungsbeispiel trapezförmig ausgebildet, verjüngt sich nämlich nach unten (Fig. 13). Die Entladeöffnung 28 ist so bemessen, dass sie übergangslos an die hinteren Kanten der Bodenwandung 24 und der Seitenwände 25 anschließt. Dazu entspricht die trapezförmige Gestalt der Entladeöffnung 28 dem Querschnitt des Behälters 28 an der Rückwand 26. Die Entladeöffnung 28 ist vollflächig durch eine ebenfalls trapezförmige Entladeklappe 31 verschließbar. Die Entladeklappe 31 ist mit einem oberen, horizontalen Rand 32 schwenkbar an der Rückwand 26 des Behälters 20 angelenkt. Durch Hochschwenken der Entladeklappe 31 ist die Entladeöffnung 28 bei Bedarf vollflächig freigebbar.

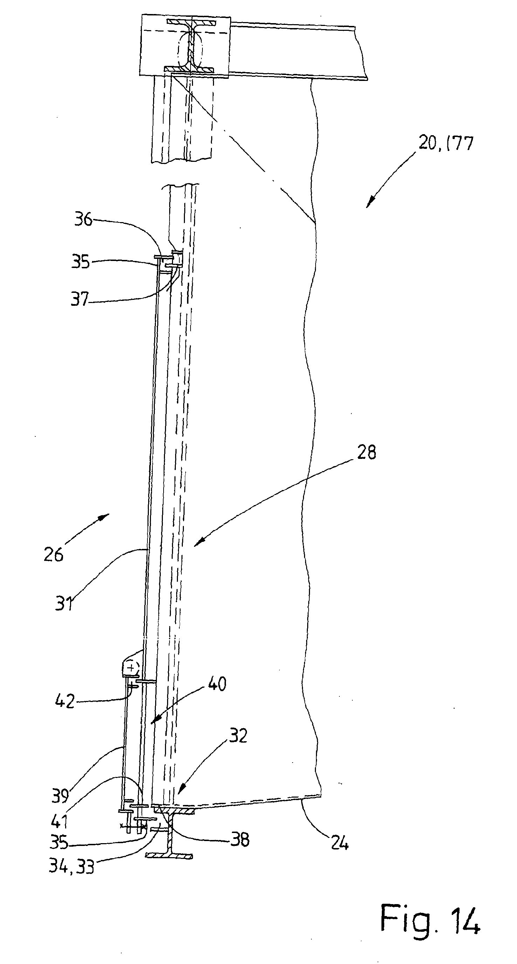

Die Entladeklappe 31 ist gegenüber der Rückwand 26 des Behälters 20 im geschlossenen Zustand abgedichtet. Zu diesem Zweck ist die Entladeöffnung 28 ringsherum von einer zur Entladeklappe 31 hin offenen umlaufenden Kammer 33 umgeben, die teilweise von einer elastischen Dichtung 34 ausgefüllt ist. In die Dichtung 34 greift ein äußerer Rahmen 35 der Entladeklappe 31 ein (Fig. 14). Zumindest im oberen Rand 32 der Entladeklappe 31, vorzugsweise aber auch auf den nach unten konvergierend zusammenlaufenden Schrägseiten der Entladeklappe 31 ist eine weitere elastische Dichtung 36 vorgesehen. In diese taucht dichtend in längerer, zum Rand der Entladeöffnung 28 weisender Schenkel 37 zur Bildung der Kammer 33 an der Außenseite der Rückwand 26 ein (Fig. 14). Auf diese Weise sind die betreffenden Kanten der Entladeklappe 31 doppelt gegenüber der Rückwand 26 abgedichtet.

Die Kammer 33 an der Außenseite der Rückwand 26 umgibt die Entladeöffnung 28 derart, dass zumindest an der Unterseite der Entladeöffnung 28 die Kammer 33 von einem innenliegenden oberen Schenkel 38 gebildet ist, der die schräge Bodenwandung 24 des Behälters 20 rückwärtig verlängert, wodurch bei geöffneter Entladeklappe 31 ein stufenloser bzw. absatzloser Übergang bzw. Auslauf der Bodenwandung 24 zur Entladeöffnung 28 gegeben ist (Fig. 14).

Beim hier gezeigten Behälter 20 ist der Entladeklappe 31 ein kleinerer Entladedeckel 39 zugeordnet. Der runde Entladedeckel 39 ist aufklappbar einem unteren Bereich der größeren Entladeklappe 31 zugeordnet. Der Durchmesser des Entladedeckels 39 ist so gewählt, dass er üblichen (genormten) Durchmessern von Schläuchen oder Rohren mit beispielsweise einer Nennweite von 250mm entspricht. Eine Öffnung 40 in der Entladeklappe 31 ist von einem umlaufenden Ring 41 umgeben, der in eine den Entladedeckel 39 umgebende Dichtung 42 eintaucht (Fig. 14). Die Öffnung 40 in der Entladeklappe 31 ist somit auch vom Entladedeckel 39 dicht verschließbar.

Der Behälter 20 ist von dem dreidimensionalen, quaderförmigen Rahmen 21 umgeben. An allen acht Ecken des Rahmens 21 sind Eckbeschläge 44 angeordnet. Es handelt sich hierbei um genormte Eckbeschläge 44, wie sie auch an allen Ecken von ISO-Containern angeordnet sind. Die Eckbeschläge 44 sind durch Längsträger 45, Querträger 46 und Säulen verbunden. Zwischen den Eckbeschlägen 44 sind weitere Träger vorgesehen, die insbesondere die Seitenwände 25 und die Bodenwandung 24 des Behälters 24 umschließen und dadurch stabilisieren. Die vier unteren Eckbeschläge 44 sind durch zwei parallele Längsträger 45 und zwei parallele Querträger 46 verbunden. Die an den Knotenpunkten durch Eckbeschläge 44 verbundenen Längsträger 45 und 46 bilden so einen in einer horizontalen Ebene liegenden Bodenrahmen 47. Dieser Bodenrahmen 47 ist Bestandteil des Rahmens 21, bildet nämlich einen Teil desselben.

Unter dem Bodenrahmen 47 des den Behälter 20 umgebenden Rahmens 21 ist der Unterrahmen 22 angeordnet. Der Unterrahmen 22 liegt in einer zum Bodenrahmen 47 parallelen Ebene. Gebildet ist der Unterrahmen 22 aus mindestens zwei parallelen Längsträgern 49 und zwei Querträgern 50, die an ihren vier Ecken ebenfalls durch Eckbeschläge 51 verbunden sind. Bei diesen Eckbeschlägen 51 handelt es sich auch um genormte Eckbeschläge 51, wie sie bei ISO-Containern üblich sind. Dadurch sind die Eckbeschläge 51 des Unterrahmens 22 gleichermaßen ausgebildet wie die Eckbeschläge 44 des Rahmens 21.

Der Unterrahmen 22 ist mit dem Bodenrahmen 47 des den Behälter 20 umgebenden Rahmens 21 mindestens teilweise lösbar verbunden, und zwar im einfachsten Falle durch vier Kuppelstücke, wobei es sich um Kuppelstücke handeln kann, die zum Verbinden über einander gestapelter Container an Bord von Schiffen dienen und grundsätzlich bekannt sind. Vorzugsweise handelt es sich hierbei um halbautomatische oder automatische Kuppelstücke. Der Rahmen 21 des Behälters 20 und der Unterrahmen 22 sind zusammen so bemessen, dass wenn sie durch Kuppelstücke 52 miteinander verbunden sind, die oberen Eckbeschläge 44 des Rahmens 21 und die Eckbeschläge 51 des Unterrahmens 22 Abstände voneinander aufweisen, die den Abstände von Eckbeschlägen genormter ISO-Container, beispielsweise 20'-Containern, 40'-Containern oder 45'-Containern, entsprechen. Dabei kann es sich um normal hohe und überhohe Container handeln. Hierdurch kann die Vorrichtung wie ein handelsüblicher Container an Bord von Schiffen gestaut und bewegt werden.

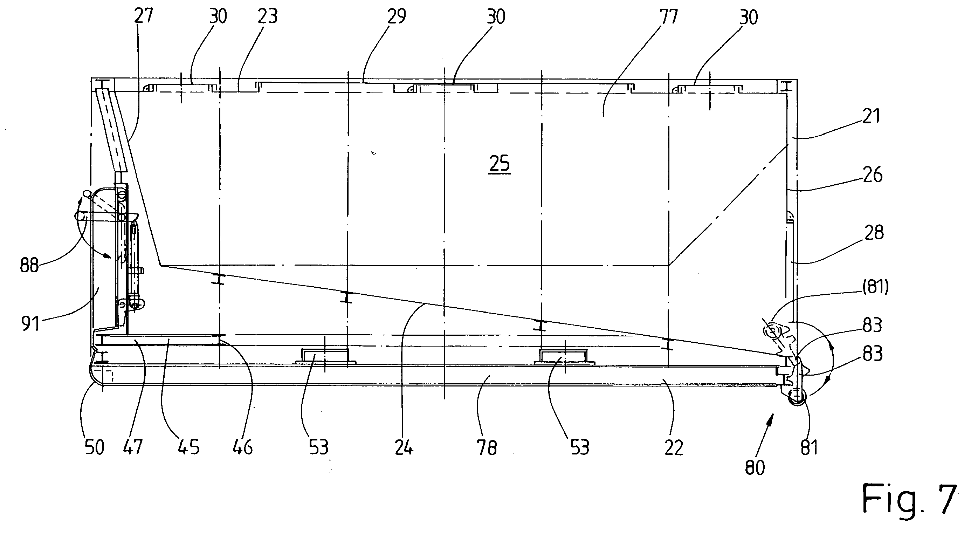

Der Unterrahmen 22 befindet sich aus verschiedenen Gründen mit Abstand unter dem Bodenrahmen 21. Beispielsweise kommt dieser Abstand zustande durch die Kuppelstücke 52 zwischen den Eckbeschlägen 44 des Bodenrahmens 47 und den Eckbeschlägen 51 des Unterrahmens 22. Dieser Abstand zwischen dem Bodenrahmen 47 und dem Unterrahmen 22 wird überbrückt durch Stützmittel. Bei den Stützmitteln handelt es sich zum einen um sogenannte Gabelstaplertaschen 53 (Fig. 7). Diese sind fest mit der Oberseite des Unterrahmens 22 verbunden und weisen eine Höhe auf, dass darauf der Bodenrahmen 47 des dem Behälter 20 umgebenden Rahmens 21 aufliegt. Es erfolgt so eine Abstützung der Längsträger 45 des Bodenrahmens 47 auf den Längsträgern 49 des Unterrahmens 22. Des Weiteren sind im gezeigten Ausführungsbeispiel zwischen den Eckbeschlägen 44 bzw. 51 und den Gabelstaplertaschen 53 Stützträger 54, nämlich Querträger, vorgesehen. Auch diese dienen zur Abstützung des Bodenrahmens 47 auf dem Unterrahmen 22. Befestigt sind die Stützträger 54 auch nur auf dem Unterrahmen 22. Insbesondere wenn die Eckbeschläge 44 des Bodenrahmens 47 durch Kuppelstücke 52 oder andere Verbindungsmittel mit dem Unterrahmen 22 verbunden sind, führen die Gabelstaplertaschen 53 und die Stützträger 54 dazu, dass ein fachwerkartiges Tragwerk entsteht, das einen stabilen Unterbau für den Behälter 20 bildet, und zwar in allen denkbaren Lastfällen. Die aus dem Bodenrahmen 47 und dem Unterrahmen 22 gebildete Bodenbaugrupe der erfindungsgemäßen Vorrichtung biegt sich dadurch nur unwesentlich durch, wenn selbst die beladene Vorrichtung mit vollständig mit Schüttgut gefüllten Behälter 20 an den oberen Eckbeschlägen 44 des Rahmens 21 oder den Gabelstaplertaschen 53 angehoben wird.

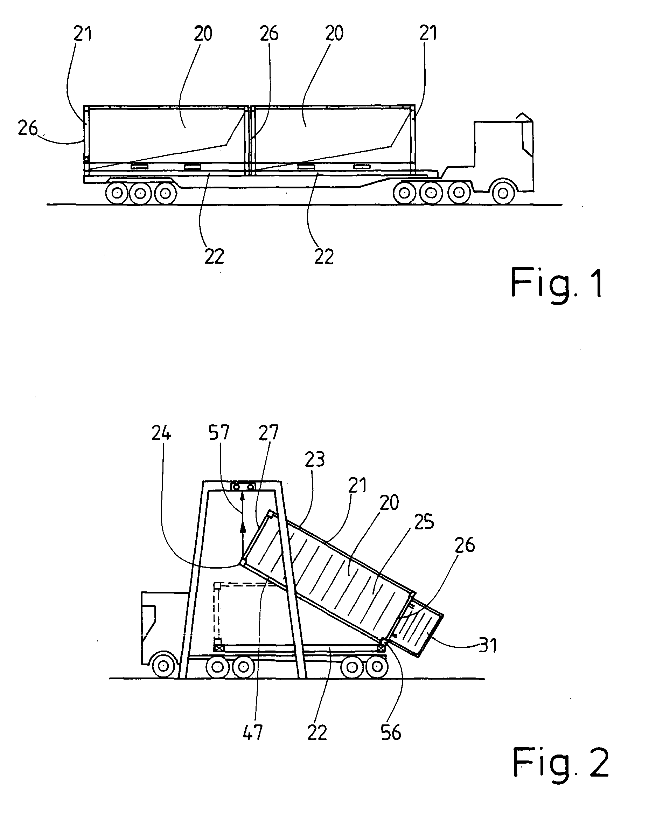

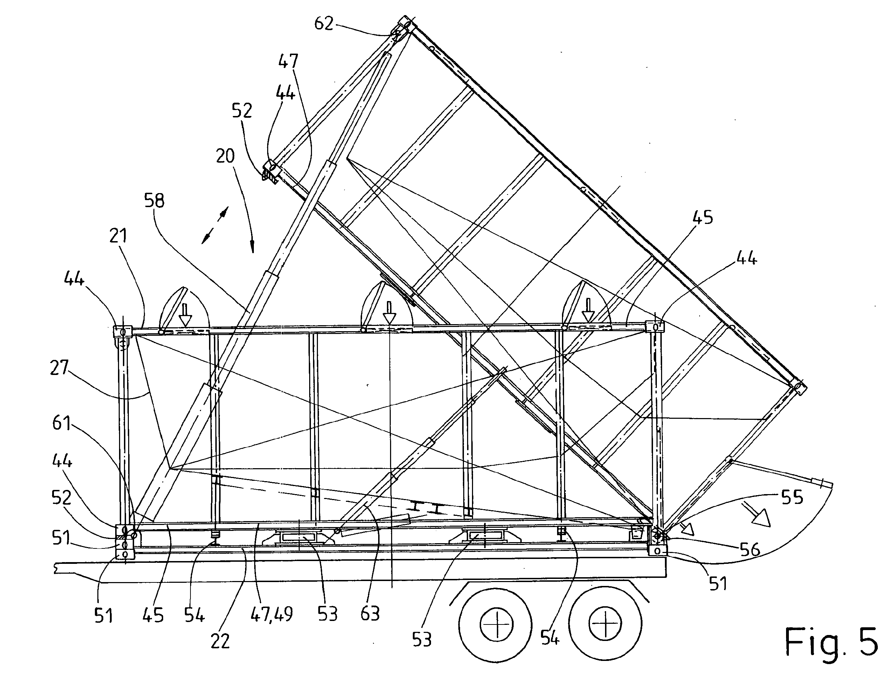

Der Behälter 20 mit dem diesen umgebenden Rahmen 21 (einschließlich des einen Teil des Rahmens 21 bildenden Bodenrahmens 47) ist gegenüber dem Unterrahmen 22 kippbar. Vorwiegend in den Fig. 2 und 5 ist ein Ausführungsbeispiel gezeigt, bei dem der Behälter 20 an seiner Vorderseite gegenüber dem Unterrahmen 22 anhebbar ist. Es befindet sich dann unterhalb der Rückwand 26 des Behälters 20 eine quer zur Längsrichtung des Behälters 20 verlaufende horizontale Kippachse 55. Konkret befindet sich die Kippachse 55 zwischen dem hinteren Querträger 46 des Bodenrahmens 47 und dem hinteren Querträger 50 des Unterrahmens 22. Bei diesem kippbaren Behälter 20 sind beim Ausführungsbeispiel der Fig. 2 und 5 nur zwei Kuppelstücke 52 zwischen den vorderen Eckbeschlägen 44 des Bodenrahmens 47 und an den vorderen Eckbeschlägen 51 des Unterrahmens 22 angeordnet. Zum Kippen des Behälters 20 sind zuvor die beiden vorderen Kuppelstücke 52 zu öffnen, sodass die Verbindung zwischen dem Bodenrahmen 47 und dem Unterrahmen 22 am vorderen Ende des Behälters 20 geöffnet wird. Dabei verbleiben die Kuppelstücke 52 entweder unter dem Bodenrahmen 47 oder auf dem Unterrahmen 22. Zum Transport des Behälters 20 ist dieser gegen ein unbeabsichtigtes Verkippen gesichert durch die dann geschlossenen Kuppelstücke 52 zwischen dem Bodenrahmen 47 und dem Unterrahmen 22.

Im Ausführungsbeispiel der Fig. 5 sind den hinteren (unteren) Ecken des Bodenrahmens 47 besondere Kippbeschläge 56 zugeordnet. Die Schwenkachse jedes Kippbeschlags 56 verläuft durch die Kippachse 55. Aus baulichen Gründen weist jeder Kippbeschlag 56 eine Höhe auf, die nach unten gegenüber den vorderen Eckbeschlägen 44 des Bodenrahmens 47 vorsteht. Um diese größere Höhe der Kippbeschläge 56 in den hinteren Eckbeschlägen 44 auszugleichen, weist der Unterrahmen 22 an den vorderen Ecken zwei übereinanderliegende Eckbeschläge 51 auf (Fig. 5). Zusammen mit den Kuppelstücken 52 zwischen vorderen Eckbeschlägen 44 und 51 wird so erreicht, dass trotz der hinteren, höheren Kippbeschläge 56 der Unterrahmen 22 mit parallem Abstand zum Bodenrahmen 47 verläuft (Fig. 7).

Am hinteren Ende des Behälters 20, wo die Kippbeschläge 56 sich befinden, sind die unter dem Bodenrahmen 47 nach unten vorstehenden Kippbeschläge 56 mit dem Eckbeschlag 51 des Unterrahmens 22 verbunden. Dies kann sowohl fest als auch lösbar geschehen. Wegen der höheren Kippbeschläge 56 weist der Unterrahmen 22 an seinen hinten liegenden Ecken nur einen Eckbeschlag 51 auf und nicht zwei übereinanderliegende Eckbeschläge wie das am vorderen Ende zum Höhenausgleich der Kippbeschläge 56 erforderlich ist.

Das Ankippen des Behälters 20 mit dem diesen umgebenden Rahmen 21, insbesondere dem zum Rahmen 21 gehörenden Bodenrahmen 47, erfolgt im einfachsten Falle durch eine externe Hubeinrichtung. Hierbei kann es sich z. B. um eine übliche Containerbrücke (Fig. 2) handeln. Die Hubseile 57 werden durch geeignete Mittel an mindestens zwei vordere Eckbeschläge 44, und zwar untere Eckbeschläge 44 oder obere Eckbeschläge 44, des Rahmens 21 angehängt und der Behälter 20 dann an seinem vorderen Ende angehoben. Es können auch andere bekannte Hebezeuge Verwendung finden, beispielsweise Krane.

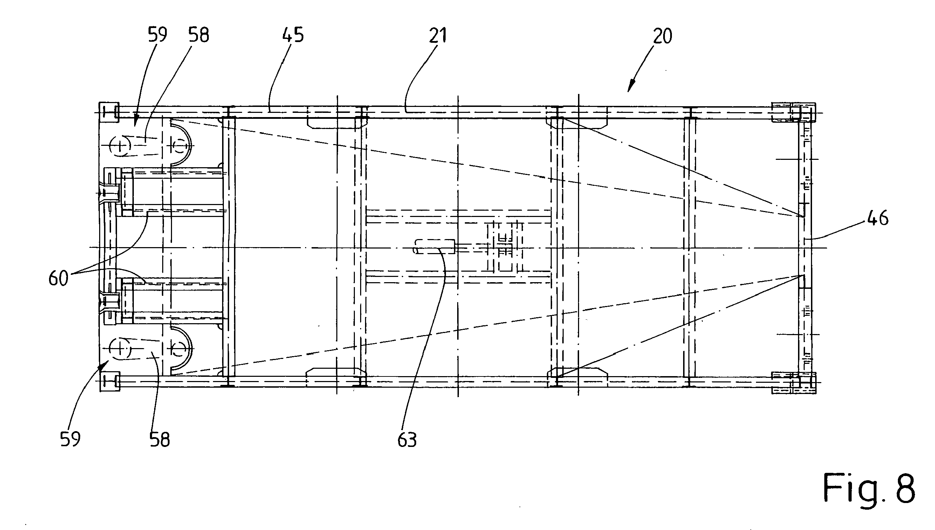

Die Vorrichtung weist vorzugsweise mindestens ein eigenes Huborgan zum Ankippen des Behälters 20 mit dem Rahmen 21 gegenüber dem Unterrahmen 22 auf. In einem gezeigten Ausführungsbeispiel finden hierfür zwei hydraulische Teleskopzylinder 58 Verwendung (Fig. 5 und 8). Jeder Teleskopzylinder 58 ist in einer Nische 59 an gegenüberliegenden Seiten des Rahmens 21 angeordnet, und zwar befindet sich die Nische im Bereich gegenüberliegender vorderer Ecken des Behälters 20 die entsprechend ausgespart sind (Fig. 8). Im Bereich jeder Nische 59 ist im Rahmen 43 ein Gerüst 60 gebildet, das die jeweilige Nische 59 umgibt und die Krafteinleitung der Teleskopzylinder 58 in den Rahmen 21 des Behälters 20 ermöglicht.

Jeder Teleskopzylinder 58 ist mit seinem zylinderseitigen Ende 61 am Unterrahmen 22 angelenkt. Ein gegenüberliegendes kolbenstangenseitiges Ende 62 jedes Teleskopzylinders 58 ist in der Nähe seiner oberen Ecke des Rahmens 21 an einem vorderen Querträger 46 befestigt (Fig. 5).

Es ist denkbar, im Bereich der Mitte des Behälters 20 unter einer Bodenwandung 24 mindestens einen zusätzlichen Teleskopzylinder 63 anzuordnen. Dieser kann gegebenenfalls auch alternativ vorgesehen sein. An der Stelle der Teleskopzylinder 58 und/oder 63 können auch andere übliche Huborgane zum Ankippen des Behälters 20 dienen, beispielsweise Seiltriebe, Zahnstangentriebe oder Kettentriebe. Es ist auch denkbar, den Behälter 20 nicht nach hinten sondern zur Seite zu verkippen. Auch ist es möglich, den Rahmen 21 mit dem Behälter 20 so lösbar mit dem Unterrahmen 22 zu verbinden, dass durch gezieltes Lösen von Verbindungen an zwei Ecken der Behälter 20 in beliebige Richtungen verkippbar ist. Dann müssen gegebenenfalls auch die Seitenwandungen 25 mit mindestens einer Entladeöffnung versehen sein. Außerdem kann der Behälter 20 im Inneren mehrere Kammern aufweisen. Diese vorzugsweise in Längsrichtung hintereinander liegenden Kammern weisen dann jeweils eine eigene Entladeöffnung auf, die sich zweckmäßigerweise in einer oder beiden Seitenwandungen 25 befindet. In diesem Fall wird der Behälter 20 bevorzugt zur Seite gekippt, wenn er entladen werden soll.

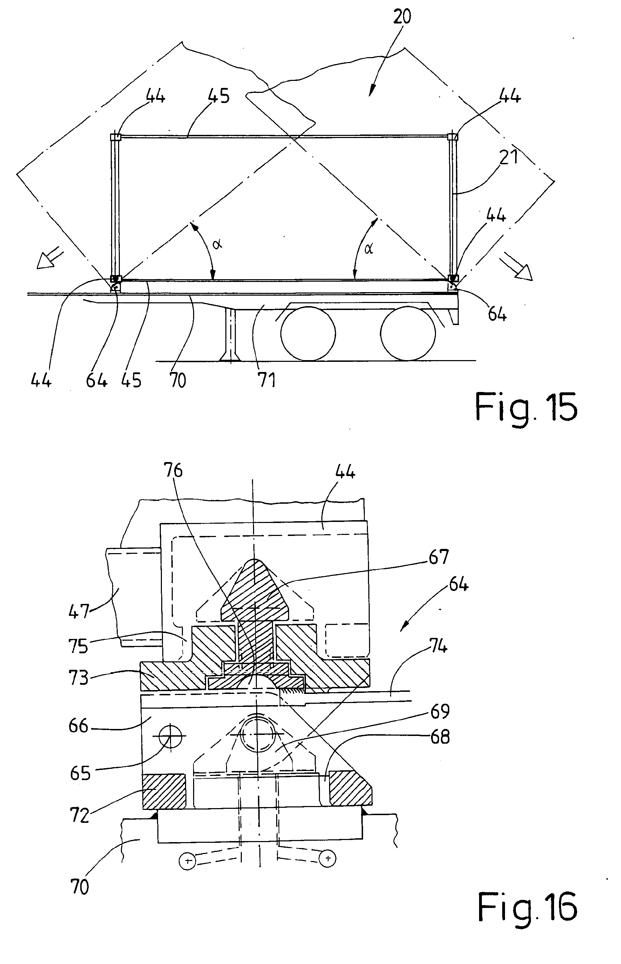

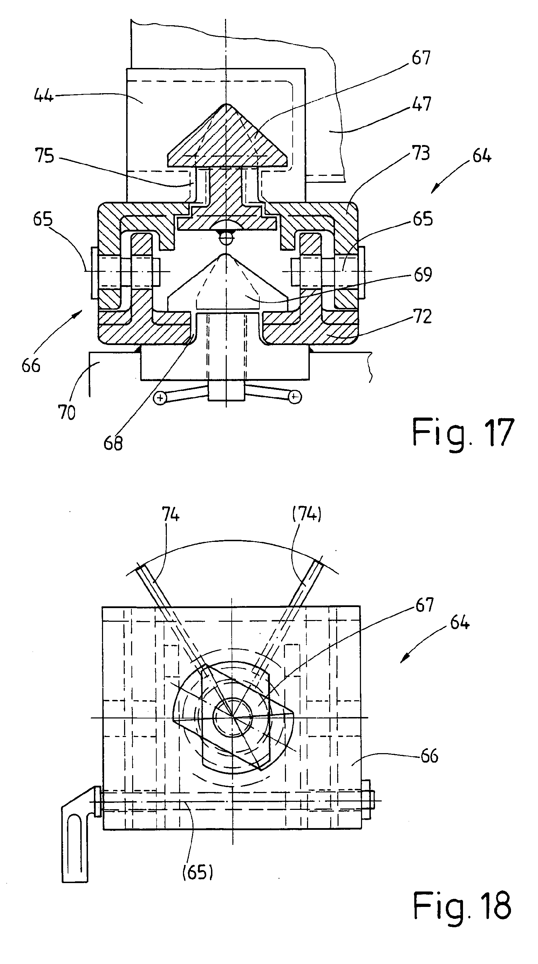

Die Fig. 16 bis 18 zeigen ein Kuppelstück 64, dass in besonderer Weise ausgebildet ist den zuvor beschriebenen Behälter 20 mit dem diesen umgebenden Rahmen 21 gegenüber dem Unterrahmen 22 zu verkippen. Dieses Kuppelstück 64 macht die besonders ausgebildeten Kippbeschläge 56 (Fig. 5) überflüssig. Eine Kippachse 65 zum Verkippen des Behälters 20 gegenüber dem Unterrahmen 22 befindet sich in diesem Kuppelstück 64, ist also integraler Bestandteil desselben.

Das Kuppelstück 64 weist ein Mittelteil 66 und (im Ausführungsbeispiel der Fig. 16 bis 18) nur einen oberen Verrieglungsvorsprung 67 auf. Dieser verdrehbare Verrieglungsvorsprung 67 ermöglicht eine lösbar Verriegelung des Kuppelstücks 64 mit einem unteren Eckbeschlag 44 des Rahmens 21. An der Unterseite verfügt das Mittelteil 66 nur über ein Langloch 68, wie es in genormten Eckbeschlägen 44, 51 üblich ist. Durch dieses Langloch 68 hindurch erstreckt sich ein vorzugsweise ebenfalls drehbarer Verriegelungsvorsprung 69, der beispielsweise auf dem Unterrahmen 22 angeordnet ist oder sich auf einer Ladefläche 70 eines Trailers 71 (Fig. 15) befindet. Im verriegelten Zustand hintergreift der Verriegelungsvorsprung 69 das Langloch 68 im Mittelteil 66 des Kuppelstücks 64 von innen und führt dadurch eine Verbindung des Kuppelstücks 64 mit der Ladefläche 70 oder dem Unterrahmen 22 herbei.

Das Mittelteil 66 des Kuppelstücks 64 ist zweiteilig ausgebildet, besteht nämlich aus einem Unterteil 72 und einem Oberteil 73. Das Oberteil 73 ist gegenüber dem Unterteil 72 verschwenkbar, und zwar um die durch das Mittelteil 66 verlaufende horizontale Kippachse 65. Auf diese Weise bildet das Kuppelstück 64 ein Kippgelenk zum Verkippen des Behälters 20 mit dem Rahmen 21 gegenüber dem Unterrahmen 22.

Der obere Verrieglungsvorsprung 67 ist drehbar im Oberteil 73 gelagert, und zwar so, dass er von einem Handhebel 74 um vorzugsweise 90° verschwenkbar ist von einer Entriegelungsstellung in eine in der Fig. 16 gezeigte Verrieglungsstellung. In dieser hintergreift der Verriegelungsvorsprung 67 gegenüberliegende Randbereiche eines Langlochs 75 im unteren Eckbeschlag 44 des Bodenrahmens 47 bzw. des Rahmens 21. Die in das Oberteil 73 hineinragende Unterseite des Verriegelungsvorsprungs 67 ist mit einer Ausnehmung 76 versehen, in die die Spitze des durch das Unterteil 72 hindurchragenden Verriegelungsvorsprungs 69 eintreten kann, wodurch die Bauhöhe des Kuppelstücks 64 verringert wird.

Das Kuppelstück 64 kann auch dazu dienen, den Rahmen 21 bzw. den Bodenrahmen 47 an der Unterseite desselben direkt mit der Ladefläche 70 eines Trailers 71 (Sattelauflieger) zu verbinden (Fig. 15). Es entfällt dann der Unterrahmen 22. Die Fig. 15 zeigt auch, dass allen vier unteren Eckbeschlägen 44 des Rahmens 21 gleiche Kuppelstücke 64 zugeordnet sind. Diese sind entgegengesetzt herum den jeweiligen Stirnseiten zugeordnet, sodass der Rahmen 21 mit dem Behälter 20 gegenüber der Ladefläche 70 des Trailers 71 sowohl nach vorn als auch nach hinten kippbar ist, wie das in der Fig. 15 gestrichelt dargestellt ist. Die Kipprichtung wird stets dadurch festgelegt, dass an derjenigen Stirnseite, an der der Behälter 20 mit dem Rahmen 21 angehoben werden soll, die Kuppelstücke 64 geöffnet werden durch Verdrehen des Verriegelungsvorsprungs 67 mittels des jeweiligen Handhebels 74 oder der Verriegelungsvorsprünge 69 des Trailers 71. Die beiden gegenüberliegenden, geschlossenen Kuppelstücke 64 bilden dann mit ihren Kippachsen 65 eine gemeinsame Kippachse 55 zum Verkippen des Behälters 20 mit dem Rahmen 21 gegenüber der Ladefläche 70 des Trailers 71.

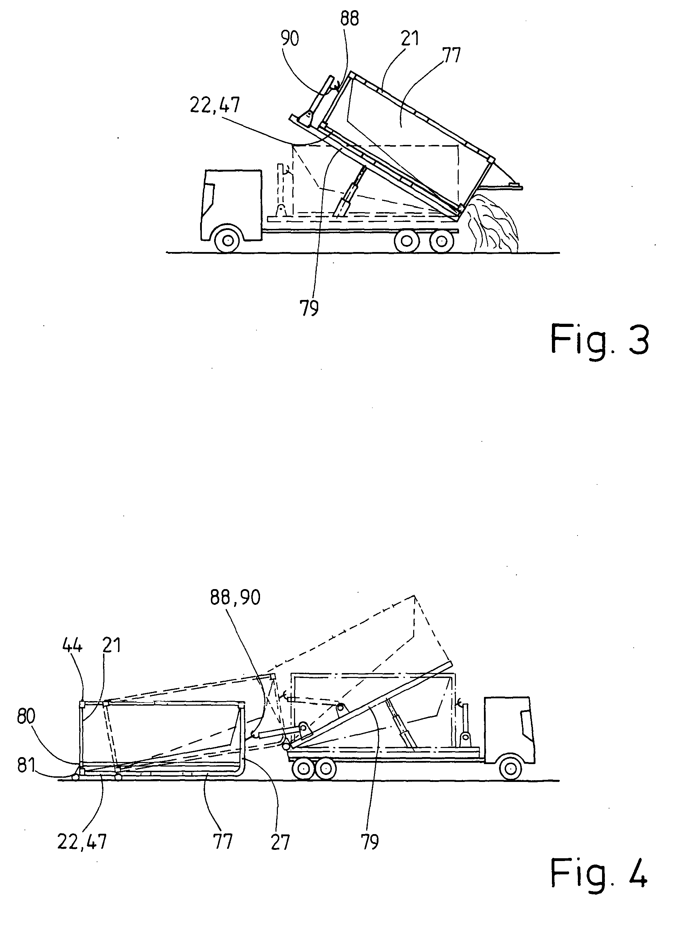

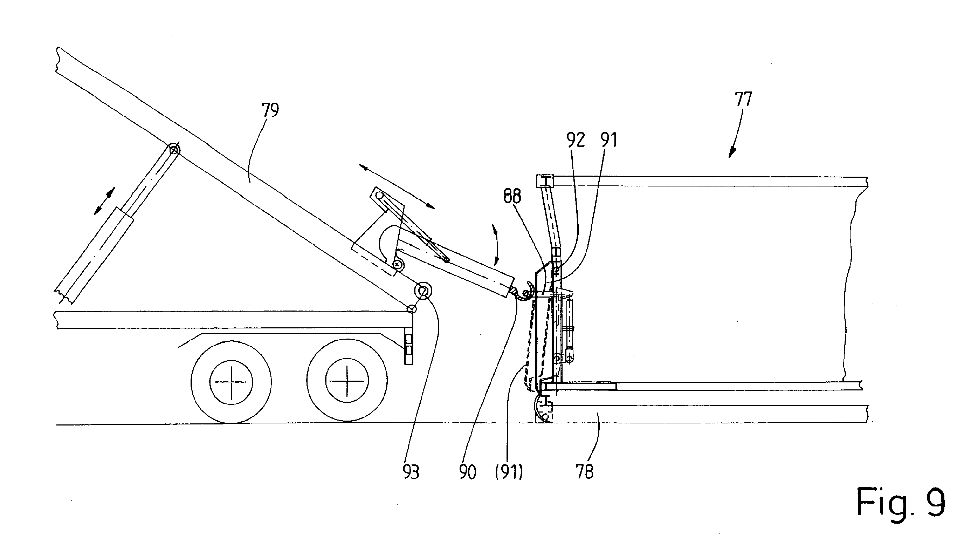

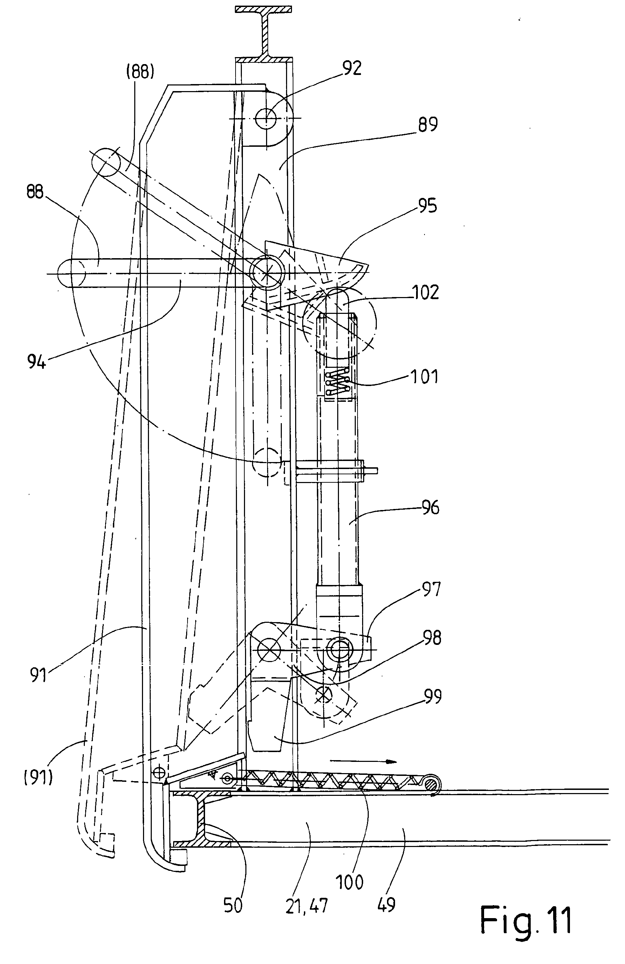

Ein weiteres Ausführungsbeispiel der erfindungsgemäßen Vorrichtung zeichnet sich dadurch aus, dass der Behälter 20 mit dem Rahmen 21 und dem Unterrahmen 22 als eine Abrolleinheit bzw. Abrollcontainer ausgebildet ist. Der Behälter 77 kann dann auch als Abrollbehälter oder Absetzbehälter dienen. Im Prinzip ist der Behälter 77 genauso wie der Behälter 20 mit Rahmen 21 und Unterrahmen 22 ausgebildet, sodass für gleiche Teile gleiche Bezugsziffern verwendet werden. Beim Behälter 77 weist der Unterrahmen 22 zusätzlich zu den Längsträgern 45 zwei parallele Gleitkufen 78 auf, die sich über die gesamte Länge des Unterrahmens 22 erstrecken, dabei zwischen den Längsträgern 45 liegen. Die Gleitkufen 78 sind gegenüber den Längsträgern 45 nach innen versetzt zur Mittelebene des Behälters 77, wobei die Abstände der jeweiligen Gleitkufe 78 von der Mittelebene gleich sind. Die Unterkanten der Gleitkufen 78 liegen innerhalb des von den oberen Eckbeschlägen 44 des Rahmens 21 und den Eckbeschlägen 51 des Unterrahmens 22 aufgespannten Quaders mit Abmessungen genormter ISO-Container. Die Gleitkufen 78 gleiten auf in den Figuren nicht gezeigten Rollen eines Abrollaufbaus des in den Fig. 3 und 4 vollständig und in den Fig. 9 und 10 teilweise gezeigten Fahrzeugs entlang. Die Gleitkufen 78 dienen außerdem zur zusätzlichen Versteifung des Unterrahmens 22.

Die Fig. 3 und 4 zeigen ein Fahrzeug mit einem ankippbaren Abrollaufbau 79. Damit kann der Behälter 77 zum Entleeren des Schüttguts angekippt werden (Fig. 3). In diesem Fall ist es nicht zwingend erforderlich, dass der Behälter 77 noch gegenüber dem Unterrahmen 22 verkippbar ist, obwohl für andere Einsätze, insbesondere wenn der Behälter 77 nicht auf einem Fahrzeug mit einem Abrollaufbau 79 angeordnet ist, der Behälter 77 auch einen Rahmen 21 aufweisen kann, der gegenüber dem Unterrahmen 22 verkippbar ist.

Wie bei bekannten Abrollbehältern üblich, weist der Behälter 77 an der unteren Hinterkante 80 zwei Rollen 81 auf, die voneinander beabstandet im Bereich gegenüberliegender Enden der Hinterkante 80 angeordnet sind (Fig. 7 und 13). Beide Rollen 81 sind verschwenkbar (siehe Pfeile in der Fig. 7), und zwar von einer ausgeklappten Betriebsposition in eine einklappte Ruheposition (gestrichelte Darstellung in der Fig. 7). In der Ruheposition befinden sich die Rollen 81 mit zur Lagerung derselben dienenden Schwenkarmen 82 innerhalb der Umrisslinien der Eckbeschläge 44 des Behälters 77 und der unteren Eckbeschläge 51 des Unterrahmens 22. Dadurch stehen die Rollen 81 in der Ruhestellung nicht außen gegenüber dem Behälter 77 vor, sodass dieser wie handelsübliche Container insbesondere zum Transport auf Schiffen gestapelt werden kann. In der Betriebsstellung hingegen befinden sich die Rollen 81 außerhalb der Umrisse des Behälters 77, stehen nämlich gegenüber der Unterseite des Unterrahmens 22 vor (Fig. 7). Dann kann der Behälter 77 mit den Rollen 81 an seiner Hinterkante 80 auf einem festen Untergrund (Boden) abrollen zum vollständigen Absetzen des Behälters 77 vom Abrollaufbau 79 des Fahrzeugs und zum Heraufziehen auf den Abrollaufbau 79.

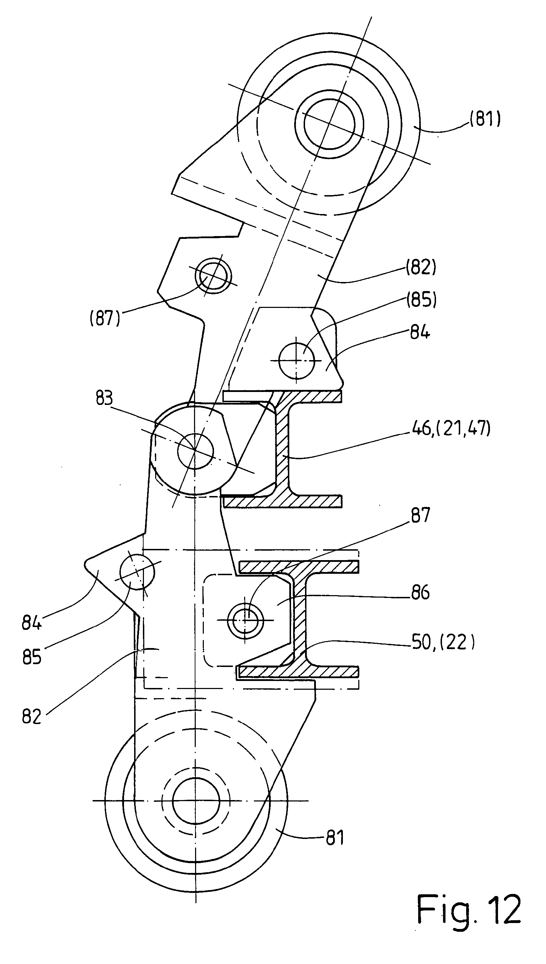

Die Fig. 12 zeigt eine Rolle 81 mit einem Schwenkarm 82 in der Betriebsstellung in der Ruhestellung. Gelagert ist jede Rolle 81 zwischen zwei Schwenkarmen 82. Die andere Rolle 81 ist genauso verschwenkbar. Die Rolle 81 ist an einem Ende jedes Schwenkarms 82 frei drehbar gelagert. Gegenüberliegende Enden der Schwenkarme 82 sind um eine Schwenkachse 83 verschwenkbar neben dem hinteren Querträger 46 des Rahmens 21, nämlich des Bodenrahmens 47 desselben, gelagert. Das Verschwenken der Rollen 81 mit dem Schwenkarmen 82 kann manuell aber auch automatisch erfolgen, beispielsweise durch einen Hydraulikzylinder. Das manuelle Verschwenken der Schwenkarme 82 mit den Rollen 81 kann unterstützt werden durch mindestens eine Feder, vorzugsweise eine Übertotpunktfeder. Jeder Schwenkarm 82 weist zwischen in den gegenüberliegenden Enden eine Nase 84 auf, in deren Bereich eine Durchgangsbohrung 85 sich befindet. Der Durchgangsbohrung 85 ist eine oberhalb des Querträgers 46 befestigte Lasche zugeordnet, die eine korrespondierende Durchgangsbohrung aufweist. Durch einen Bolzen, der durch die Durchgangsbohrung 85 in der Nase 84 sowie durch die Lasche gesteckt ist, kann die Rolle 81 mit ihren Schwenkarmen 82 in der hochgeklappten Ruhestellung formschlüssig arretiert werden. Jeder Schwenkarm 82 verfügt außerdem über eine der Nase 84 gegenüberliegenden Nase 86, die ebenfalls eine Durchgangsbohrung 87 aufweist. Diese Durchgangsbohrung 87 fluchtet in der heruntergeklappten Betriebsstellung der Rolle 81 mit ihren beiden Schwenkarmen 82 mit einer korrespondierenden Durchgangsbohrung, die am Querträger 50 des Unterrahmens 22 angeordnet ist. Durch einen Bolzen, der durch die Durchgangsbohrung 87 und die damit korrespondierende Durchgangsbohrung am Querträger 50 des Unterrahmens 22 hindurchgesteckt ist, können die Schwenkarme 82 mit der Rolle 81 in der Betriebsposition arretiert werden, wobei gleichzeitig eine zusätzliche Verbindung des Unterrahmens 22 mit dem Rahmen 21 des Behälters 77 herstellbar ist.

Der zum Führerhaus des Fahrzeugs weisenden Vorderseite des zum Behälters 77 ist ein schwenkbarer Schleppbügel 88 zugeordnet. Der Schleppbügel 88 ist mit gegenüberliegenden Enden an einem starren Gerüst 89 im vorderen Bereich des Rahmens 21 frei drehbar gelagert. In der eingeklappten Stellung (gestrichelt in der Fig. 11) befindet sich der Schleppbügel 88 innerhalb der Umrisslinien des Behälters 77, steht also gegenüber der Vorderseite desselben nicht vor, sodass er beim Stapeln mehrerer Behälter 77 bzw. 20 nicht stört. Manuell oder gegebenenfalls auch hydraulisch kann der Schleppbügel 88 ausgeklappt werden in eine etwa horizontale Position (Fig. 11). Durch entsprechende Eigenreibung des Schleppbügels 88 in den Lagerstellen im Gerüst 89 oder andere Arretierungen bzw. Reibbremsen verharrt der Schleppbügel 88 in seiner ausgeklappten Stellung. Der Schleppbügel 88 kann dann von einem Schlepphaken (Fig. 9 und 10) des Abrollaufbaus 79 des Fahrzeugs ergriffen werden.

Der Vorderseite des Behälters 77 sind des Weiteren zwei Leitkufen 91 zugeordnet. Die Leitkufen 91 weisen bevorzugt den gleichen Abstand wie die Gleitkufen 78 auf, sodass die Leitkufen 91 die zur Vorderseite des Behälters 77 weisenden Enden der Gleitkufen 78 benachbart sind. Die aufrechten Leitkufen 91 befinden sich beim unbenutzten Schleppbügel 88 in einer etwa senkrechten Stellung innerhalb der Umrisslinien des Behälters 77, stehen also gegenüber der Vorderseite desselben nicht vor. Wenn jedoch der Behälter 77 vom Abrollaufbau 79 heruntergelassen wird oder auf diesen aufgezogen wird, können die Leitkufen 91 vorgefahren werden, sodass sie gegenüber der Vorderseite des Behälters 77 vorstehen (Fig. 10).

Im gezeigten Ausführungsbeispiel sind die Leitkufen 91 mit oberen freien Enden um eine quer zur Längsrichtung des Behälters 77 verlaufende, horizontale Schwenkachse 92 verschwenkbar. Den Leitkufen 91 sind an der jeweiligen Schwenkachse 92 am festen Gerüst 89 des Rahmens 21 des Behälters 77 gelagert. In der Betriebsposition sind die Leitkufen 91 um die Schwenkachse 92 aus der Vorderseite des Behälters 77 herausgeschwenkt, sodass die Leitkufen 91 mit unteren Endbereichen gegenüber der Vorderseite des Behälters 77 nach außen vorstehen. Dabei sorgen die mit den unteren Enden vorgeschwenkten Leitkufen 91 dafür, dass der Unterrahmen 22 und auch der Rahmen 21 im Bereich seines Bodenrahmens 47 einen ausreichenden Abstand von der Hinterkante des Fahrzeugs, insbesondere des Abrollaufbaus 79 einhalten (Fig. 10). Um ein leichtes Aufziehen des Behälters 77 auf den Abrollaufbau 29 zu gewährleisten, weist der Abrollaufbau 79 an seiner Hinterkante frei drehbare Rollen 93 auf. Die Leitkufen 91 sind derart voneinander beabstandet, dass diese auf die Rollen 93 treffen und beim Aufziehen des Behälters 77 auf den Abrollaufbau 79 sich an bzw. auf den Rollen 93 abwälzen, wobei durch die vorgeschwenkten Leitkufen 91 übrige Teile des Behälters 77 mit den Rollen 93 nicht in Berührung kommen.

Das Verschwenken der Leitkufen 91 erfolgt vom Schleppbügel 88 aus. Wenn der Schlepphaken 90 des Abrollaufbaus 79 den Schleppbügel 88 ergriffen hat und zum Anheben der Vorderseite des Behälters 77 hochschwenkt, wird zunächst der Schleppbügel 88 ein Stück hochgeschwenkt (Fig. 10). Dabei werden vom hochschwenkenden Schleppbügel 88 die Leitkufen 91 um die Schwenkachse 92 verschwenkt in die gegenüber der Vorderseite des Behälters 77 vorstehende Betriebsposition (Fig. 10). Zum Verschwenken der Leitkufen 91 vom Schleppbügel 88 weist dieser an jedem der beiden gegenüberliegenden Schenkel 94 eine Nase 95 auf, die den jeweiligen Schenkel 94 zur vom Schleppbügel 88 weggerichteten Rückseite der Schwenkachse 92 hin verlängert. Unterhalb der jeweiligen Nase 95 ist eine etwa senkrecht gerichtete Schubstange 96 angeordnet. Auf einem freien oberen Ende der Schubstange 96 stützt sich die Nase 95 ab. Ein unteres Ende der Schubstange 96 ist gelenkig mit einem etwa horizontalen Arm 97 eines Winkelhebels 98 verbunden. Ein etwa senkrechter Arm 99 des Winkelhebels 98 liegt an der Rückseite eines unteren Endbereichs jeder Leitkufe 91 an (Fig. 11). Beim Hochschwenken des Schleppbügels 88 drückt die Nase 95 desselben die Schubstange 96 herunter, wodurch der Winkelhebel 98 in Bezug auf die Darstellung in der Fig. 11 im Uhrzeigersinn verschwenkt wird und dabei der ursprünglich senkrechte Arm 99 in eine schräg abstehende Position gelangt, in der er einen unteren Teil jeder Leitkufe 91 über die Vorderseite des Behälters 77 hinaus nach vorn drückt (Fig. 10). Da beim Aufrollen des Behälters 77 auf den Aufrollaufbau 79 in folge des Gewichts des Behälters 77, insbesondere des beladenen Behälters 77, der Schlepphaken 90 des Abrollaufbaus 79 stets den Schleppbügel 88 hochgedrückt hält, bleiben auch die Leitkufen 91 während des Aufrollens des Behälters 77 auf den Abrollaufbau 79 in der die im unteren Bereich gegenüber der Vorderseite des Behälters 77 vorgeschwenkten Stellung (Fig. 10).

Wenn der Behälter 77 sich auf dem Abrollaufbau 79 befindet bzw. abgesetzt ist und dadurch der Schlepphaken 90 den Schleppbügel 88 nicht mehr hochdrückt, gelangt dieser in seine in der Fig. 11 gezeigte etwa horizontale Stellung, wodurch der Winkelhebel 98 die jeweilige Leitkufe 91 nicht mehr nach vorne drückt. Damit jede Leitkufe 91 dann zuverlässig wieder in die gegenüber der Vorderseite des Behälters 77 zurückgezogene Position gelangt, ist dem unteren Bereich jeder Leitkufe 91 eine Zugfeder 100 zugeordnet, die sich am Rahmen 21, und zwar Längsträger 45 des Bodenrahmens 47, abstützt.

Im Bereich des freien oberen Endes der aufrechten Schubstange 96 ist ein durch eine Druckfeder 101 axial verschiebbarer Bolzen 102 gelagert. Die Druckfeder 101 drückt den Bolzen 102 im unbelasteten Zustand hoch. Dabei ist die Federkraft der Druckfeder 101 so bemessen, dass diese nur zusammengedrückt wird, wenn aus irgendeinem Grunde sich die jeweilige Leitkufen 91 nicht verschwenken lässt. Dadurch wird eine Beschädigung des Verschwenkmechanismus der Leitkufen 91 verhindert, wenn die Leitkufen 91 aus irgendeinem Grunde nicht ausgeschwenkt werden können oder klemmen.

Wenn entsprechende Abrollaufbauten 79 vorhanden sind, insbesondere solche, die auf die erfindungsgemäße Vorrichtung abgestimmt sind, können die Leitkufen 91 entfallen. Insbesondere brauchen dann keine verschwenkbaren Leitkufen 91 vorhanden zu sein.

Die Versorgung der Teleskopzylinder 58 zum Ankippen des Behälters 20 bzw. 77 mit Drucköl kann über eine Hydraulikpumpe erfolgen, die Bestandteil des Fahrzeugs zum Transport des Behälters 20 oder 77 ist. Sofern jedoch der Behälter 20 oder 77 auf Anhängern, Eisenbahnwagons oder anderen Transportmitteln ohne eine eigene Druckölversorgung transportiert wird, ist es denkbar, die Teleskopzylinder 58 oder auch andere Hydraulikzylinder des Behälters 20 bzw. 77 über eine externe Druckölversorgung, beispielsweise eine von einem Motor angetriebene Hydraulikpumpe, mit Hydrauliköl zu versorgen.

Denkbar ist es aber auch, dass die Vorrichtung selbst einen Öltank und eine Hydraulikpumpe mit einem geeigneten Antrieb aufweist. Bei diesem Antrieb kann es sich um einen Elektromotor handeln, der durch das externe Stromnetz oder eine Batterie mit Strom versorgt wird. In diesem Falle ist die Vorrichtung autark. Der Behälter kann dann auch gekippt werden, wenn die Vorrichtung sich auf keinem Fahrzeug befindet, nämlich irgendwo abgesetzt ist. Das gilt insbesondere für Abrollbehälter, die vielfach vom Transportfahrzeug am Bestimmungsort abgesetzt werden. Diese Abrollbehälter können dann ohne fremde Energiezufuhr oder nur einen Anschluss an das ohnehin überall vorhandene Stromnetz entleert werden durch Ankippen des Behälters.

### Bezugszeichenliste:

- 20: Behälter
- 21: Rahmen
- 22: Unterrahmen
- 23: Deckwandung
- 24: Bodenwandung
- 25: Seitenwand
- 26: Rückwand
- 27: Vorderwand
- 28: Entladeöffnung
- 29: Luke
- 30: Deckel
- 31: Entladeklappe
- 32: Rand
- 33: Kammer
- 34: Dichtung
- 35: Rahmen
- 36: Dichtung
- 37: Schenkel
- 38: Schenkel
- 39: Entladedeckel
- 40: Öffnung
- 41: Ring
- 42: Dichtung
- 43:
- 44: Eckbeschlag
- 45: Längsträger
- 46: Querträger
- 47: Bodenrahmen
- 48:
- 49: Längsträger
- 50: Querträger
- 51: Eckbeschlag
- 52: Kuppelstück
- 53: Gabelstaplertasche
- 54: Stützträger
- 55: Kippachse
- 56: Kippbeschlag
- 57: Hubseil
- 58: Teleskopzylinder
- 59: Nische
- 60: Gerüst
- 61: zylinderseitiges Ende
- 62: kolbenstangenseitiges Ende
- 63: Teleskopzylinder
- 64: Kuppelstück
- 65: Kippachse
- 66: Mittelteil
- 67: Verriegelungsvorsprung
- 68: Langloch
- 69: Verriegelungsvorsprung
- 70: Ladefläche
- 71: Trailer
- 72: Unterteil
- 73: Oberteil
- 74: Handhebel
- 75: Langloch
- 76: Ausnehmung
- 77: Behälter
- 78: Gleitkufe
- 79: Abrollaufbau
- 80: Hinterkante
- 81: Rolle
- 82: Schwenkarm
- 83: Schwenkachse
- 84: Nase
- 85: Durchgangsbohrung
- 86: Nase
- 87: Durchgangsbohrung
- 88: Schleppbügel
- 89: Gerüst
- 90: Schlepphaken
- 91: Leitkufe
- 92: Schwenkachse
- 93: Rolle
- 94: Schenkel
- 95: Nase
- 96: Schubstange
- 97: Arm
- 98: Winkelhebel
- 99: Arm
- 100: Zugfeder
- 101: Druckfeder
- 102: Bolzen

## Patentansprüche

1. Vorrichtung zum Transport von Schüttgütern mit einem Behälter (20, 77) zur Aufnahme des Schüttguts, **dadurch gekennzeichnet, dass** dem Behälter (20, 77) ein Bodenrahmen (48) zugeordnet ist oder der Behälter (20, 77) mit einem Bodenrahmen (47) versehen ist und dem Bodenrahmen (47) ein Unterrahmen (22) zugeordnet ist.

2. Vorrichtung nach Anspruch 1, **dadurch gekennzeichnet, dass** der Unterrahmen (22) mindestens einseitig vom Bodenrahmen (47) bzw. dem Behälter (20, 77) lösbar ist, wobei vorzugsweise der Behälter (20, 77), insbesondere mit dem Bodenrahmen (47), gegenüber dem Unterrahmen (22) kippbar ist.

3. Vorrichtung nach einem der vorhergehenden Ansprüche, **dadurch gekennzeichnet, dass** der Behälter (20, 77) von einem dreidimensionalen Rahmen (21) umgeben ist, wobei der Bodenrahmen (47) Bestandteil des den Behälter (20, 77) umgebenden Rahmens (21) ist.

4. Vorrichtung nach einem der vorhergehenden Ansprüche, **dadurch gekennzeichnet, dass** der Rahmen (21) des Behälters (20, 77) zusammen mit dem unter dem Rahmen (21) angeordneten Unterrahmen (22) Abmessungen aufweist, die denen eines genormten Containers entsprechen, insbesondere mindestens den Ecken des Bodenrahmens (47) genormte Eckbeschläge (44) zugeordnet sind, vorzugsweise allen Ecken des Rahmens (21) genormte Eckbeschläge (44) zugeordnet sind und/oder den Ecken des Unterrahmens (22) Eckbeschläge (51) zugeordnet sind, vorzugsweise genormte Eckbeschläge (51) von Containern.

5. Vorrichtung nach einem der vorhergehenden Ansprüche, **dadurch gekennzeichnet, dass** zwischen zwei Eckbeschlägen (44) einer Seite, insbesondere einer Stirnseite, des Bodenrahmens (47) und zwei Eckbeschlägen (51) einer gleichen Seite, insbesondere Stirnseite, des Unterrahmens (22) Kuppelstücke angeordnet sind zum vorzugsweise lösbaren Verbinden der jeweiligen Seite des Bodenrahmens (47) mit dem Unterrahmen (22), wobei vorzugsweise die Eckbeschläge an einer Seite, insbesondere Stirnseite, des Bodenrahmens (47) und/oder des Unterrahmens (22) zum Verkippen des Behälters (20, 77) mit dem Bodenrahmen (47) gegenüber dem Unterrahmen (22) ausgebildet sind.

6. Vorrichtung nach einem der vorhergehenden Ansprüche, **dadurch gekennzeichnet, dass** an einer Seite zwischen dem Bodenrahmen (47) und dem Unterrahmen (22) ein Verkippen des Bodenrahmens (47) mit dem Behälter (20, 77) ermöglichende Kuppelstücke (64) angeordnet sind, vorzugsweise jedes dieser Kuppelstücke (64) aus einem Unterteil (72) und ein demgegenüber verschwenkbares Oberteil (73) aufweist.

7. Vorrichtung nach einem der vorhergehenden Ansprüche, **dadurch gekennzeichnet, dass** zwischen den Ecken des Unterrahmens (22) und des Bodenrahmens (47) mindestens ein Stützmittel angeordnet ist, das einen Abstand zwischen dem Bodenrahmen (47) und dem Unterrahmen (22) überbrückt zur Abstützung des Bodenrahmens (47) auf den Unterrahmen (22), wobei dass mindestens eine Stützmittel vorzugsweise mit dem Unterrahmen (22) fest verbunden ist und gegebenenfalls mindestens einige Stützmittel als Gabelstaplertaschen (23) zur Aufnahme von Gabelstaplerzinken ausgebildet sind.

8. Vorrichtung nach einem der vorhergehenden Ansprüche, **gekennzeichnet durch** mindestens einem Kipporgan zum Verkippen des Behälters (20, 77) mit dem Rahmen (21), insbesondere Bodenrahmen (47), gegenüber dem Unterrahmen (22), wobei bevorvorzugt das oder jedes Kipporgan als ein Druckmittelzylinder, insbesondere ein Teleskopzylinder (58) ausgebildet ist, der sich einerseits am Unterrahmen (22) und andererseits am Rahmen (21) des Behälters (20, 77) abstützt und sich vorzugsweise in der eingefahrenen Ruhestellung innerhalb der Umrisse des Rahmens (21) befindet.

9. Vorrichtung nach einem der vorhergehenden Ansprüche, **dadurch gekennzeichnet, dass** der Unterrahmen (22) mit mindestens zwei parallelen Gleitkufen (78) versehen ist, die sich in Längsrichtung des Unterrahmens (22) erstrecken.

10. Vorrichtung nach einem der vorhergehenden Ansprüche, **dadurch gekennzeichnet, dass** einer Seite, vorzugsweise einer Vorderseite, des Rahmens (21) Leitkufen (91) zugeordnet sind, die vorzugsweise um eine gemeinsame Schwenkachse (92) verschwenkbar sind zwischen einer innerhalb der Umrisse des Rahmens (21) liegenden Ruhestellung in eine mindestens teilweise gegenüber den Umrissen des Rahmens (21) vorstehende Betriebsstellung.

11. Vorrichtung nach einem der vorhergehenden Ansprüche, **dadurch gekennzeichnet, dass** einer vorzugsweise vorderen Stirnseite des Behälters (20, 77), insbesondere seines Rahmens (21), ein schwenkbarer Schleppbügel (88) zugeordnet ist, vorzugsweise der eingeklappte Schleppbügel (88) innerhalb der Umrisse des Rahmens (21) des Behälters (20, 77) liegt und der ausgeklappte Schleppbügel (88) gegenüber der Stirnseite des Behälters (20, 77) bzw. seines Rahmens (21) vorsteht.

12. Vorrichtung nach Anspruch 10 oder 11, **dadurch gekennzeichnet, dass** mit dem Ausklappen des Schleppbügels (88) die Leitkufen (91) in ihre Betriebsstellung verschwenkbar sind.

13. Vorrichtung nach einem der vorhergehenden Ansprüche, **dadurch gekennzeichnet, dass** der Behälter (20, 77) mindestens eine Entladeöffnung (28) aufweist und/oder ein Boden des Behälters (20, 77) in Richtung zur Entladeöffnung (28) mindestens teilweise geneigt ist und/oder Seitenwände (25) des Behälters (20, 77) mindestens teilweise zur Entladeöffnung (28) hin zusammenlaufen, vorzugsweise auf die maximale Breite der Entladeöffnung (28).

14. Vorrichtung nach einem der vorhergehenden Ansprüche, **dadurch gekennzeichnet, dass** die oder jede Entladeöffnung (28) an einen Abschnitt einer Kante, vorzugsweise einer Hinterkante, des Bodens des Behälters (20, 77) stufenlos bzw. übergangslos anschließt und/oder der mindestens einen Entladeöffnung (28) eine schwenkbare Entladeklappe (31) zugeordnet ist, wobei insbesondere der Entladeklappe (31) ein kleinerer Entladedeckel (39) mit insbesondere kreisrunder Fläche zugeordnet ist, der gegenüber der Entladeklappe (31) verschwenkbar ist.

15. Kuppelstück zum Verbinden von Eckbeschlägen, mit einem Mittelteil (66) und mindestens einem dem Mittelteil (66) zugeordneten Verriegelungsvorsprung (67), der gegenüber dem Mitteilteil (66) vorzugsweise verdrehbar ist, **dadurch gekennzeichnet, dass** das Mittelteil (66) ein Unterteil (72) und ein gegenüber dem Unterteil (72) um eine Drehachse bzw. Kippachse (65) verschwenkbares Oberteil (73) aufweist.

16. Kuppelstück nach Anspruch 15, **dadurch gekennzeichnet, dass** das Unterteil (72) ein Langloch (75) zum Durchtritt eines Verriegelungsvorsprungs (69) eines anderen Kuppelstücks aufweist.
